# EUROPEAN PATENT SPECIFICATION

(11) **EP 3 666 742 B1**
(45) Date of publication and mention of the grant of the patent: **30.08.2023**
(21) Application number: 19020238.2
(22) Date of filing: 29.03.2019
(51) Int. Cl.: C04B 26/12, C08J 5/24, F23J 13/02, C04B 111/00, C04B 111/28

(54) **IMPROVED PHENOL-FURAN RESIN COMPOSITION WITH REDUCED COMBUSTIBILITY, PREPARATION OF PRE-IMPREGNATED FIBER-REINFORCED COMPOSITE MATERIAL AND ITS USE**
VERBESSERTE PHENOL-FURANHARZZUSAMMENSETZUNG MIT VERMINDERTER BRENNBARKEIT, HERSTELLUNG VON VORIMPRÄGNIERTEM FASERVERSTÄRKTEM VERBUNDMATERIAL UND VERWENDUNG DAVON
COMPOSITION DE RÉSINE PHÉNOL-FURANIQUE AMÉLIORÉE À COMBUSTIBILITÉ REDUITE, PRÉPARATION D'UN MATÉRIAU COMPOSITE RENFORCÉ À L'AIDE DE FIBRES PRE-IMPRÉGNÉES ET SON UTILISATION

(30) Priority: 13.12.2018 HU 1800426
(43) Date of publication of application: 17.06.2020
(73) Proprietor: Kompozitor Kft., 2220 Vecsés (HU)
(72) Inventor: Kecskemethy, Lídia, 1022 Budapest (HU); Kovácsay, István, 1138 Budapest (HU); Piukovics, Norbert, 1098 Budapest (HU)
(74) Representative: Bernin, Robert Hendrik

(56) References cited:
- US-A1- 2016 060 281
- DATABASE WPI Week 201535 24 August 2015 (2015-08-24) Thomson Scientific, London, GB; AN 2015-28815E XP002793356, & HU 1 300 573 A1 (KOMPOZITOR MUANYAGIPARI FEJLESZTO KFT) 28 April 2015 (2015-04-28)

## Description

The invention relates to an improved phenol-furan resin composition with reduced combustibility and to the production of a composite material to be pre-impregnated and fibre-reinforced with it. Further, the subject of the invention is also the application of the pre-impregnated and fibre-reinforced composite material.

Pre-impregnated materials of mainly cross-linking resin e.g. epoxy, unsaturated polyester, phenol and furan resins have for long been applied to produce composite products of high technical capacity as reinforced with high-strength fibres. Some heat-resistant, high-combustion thermosetting resin impregnated fiber reinforced composite materials, such as furan resin-based composite materials, also provide high-strength heat-resistant products such as chimney liners. Their advantages besides heat-resistance include high resistance to corrosive chemicals, e.g. to sulphuric condensation in flue gases for instance. The strength of composite materials depending on their reinforcing fibres can exceed even that of steel. Its specific weight is a quarter of steel's. However, its heat-resistance if significantly lower than that of steel. The subject invention aims to help elaborate a resin with heat-resistance of about that of steel as well as creating a pre-impregnate to be produced from it. Known pre-impregnated composite materials with decreased combustibility are produced in the method, whereas decreased combustibility, heat-curing and cross-linking resins are used for the impregnation of paper or natural fibres e.g. cellulose, wool etc or synthetic fibres of fabrics e.g. glass, carbon, graphite, polyamide or Kevlar, and then, laminates are produced from them by pressing. The laminates impregnated with resin are partially cross-linked prior to creating the end-product that is they are transferred to their so-called "B" state, whereas they are still malleable impregnates but neither fluid, nor solid any longer. This state allows storage of the impregnated material even for months' long depending on the storage temperature. These impregnated materials of "B" state, with another name called "prepregs" can by the effect of heat and pressure be hardened shaping them irreversibly to any desirable shape. The pre-impregnated composite laminates are applied as chimney liners among other applications. Other decreased-combustibility resin systems are also known, although the heat-resistance of them is far behind the desired or their mechanic characteristics are inappropriate. The currently known composite-prepreg production technologies can be summarised in the following. The process of impregnation is carried out in a solved or solvent-free original form of the resin used for the impregnation. The impregnation is applied with unfilled resins or filled with fillers. Practically applied heat cured plastic raw materials used for producing pre-impregnates include the following:
- epoxy resins
- unsaturated polyester resins
- phenolic resins
- furan resins
- melamine resins and
- carbamide resins.

The certain resin types can be made cross-linked with the use of various cross-link generators, initiators and catalysts available. The range of resin constitution may be further widened with the application of various filling agents. The purpose of that is to improve or change the mechanical, chemical and physical characteristics of the product and, in a fewer number of cases, to make the product cheaper.

More generally known filling materials include the following:
- calcium-carbonate (lime stone)
- kaolin
- wollastonite (Ca-silicate)
- silica four
- slate powder
- glass pearl compact and cored
- talc
- perlite
- aluminium-oxide
- colloid-silica

The "B" that is flexible state pre-integrate is hardened in a press by applying overpressure at 60-200 °C temperature, whereas the cross-linkage gets completed. The material in its "B" state is first softened by the effect of the heat, becomes malleable and then, along the progress of the cross-linking reactions, it gets hardened. From the manufacturing aspect, it is essential that the "B" state lasts for a longer period, in certain cases even throughout weeks long to make sure the pre-impregnate can be stored long enough accordingly.

In order to reach the appropriate life-cycle of the "B" state, different processes are applied at the different types of resins. With epoxy-resins, cross-linkage of two or more functions is applied. In case of Polyester-resin, a so-called "quasi-B" state can only be reached by mixing additives of alkali-earth metal-oxides and hydroxides (e.g. MgO) with it. With phenol-resins, the "B" state sets in by the effect of either a catalyst or heat-treatment, while regarding furan or carbamide-resin, the state can only be reached together with phenol-resin.

The hardness characteristics of products made from prepregs depend on the type, amount and direction of the reinforcing fibres in the resin. Common reinforcing fibres include the following:
- glass-fibre (9-16 µm diameter of continuous roving-fibre bunch)
- various diameter of cut glass- roving fibre
- glass mat
- glass-cloth
- in certain cases, supplementary ground glass-fibre (fibre length <1 mm) as well
- carbon filament in cut, ground or textile form
- aromatic polyamide (Kevlar^{®}) textile.

Besides the hardness features, another important requirement may be the decreased combustibility. To make sure that is also provided, the following common additives are applied:
- aluminium-hydroxide
- antimonial compounds
- boron compounds
- halogenic compounds
- phosphorus derivatives,
- nitrogen compounds such as melamine derivatives, ureas, cyanurates, as well as their combinations e.g. antimony-trioxide + hexabromide cyclododecane, in the case of which a clear synergic effect can be observed.

Products produced of the prepregs made from the above components show numerous excellent characteristics, however, good corrosion resistance and low combustibility at excellent mechanical hardness within the same composition can be reached in a very few cases only. Furthermore, no products of high heat-resistance (over 900 °C) can be produced from these materials.

The furan-phenol-carbamide based systems have excellent fire-resistance capacities even without fire-retardant additives, can reach B1 ("schwerentflamm-bar") classification as per the MSZ EN ISO 1182 standard, which corresponds to the "hardly combustible" class under the MSZ 14800/3 standard.

In the field of heat, flame and fire-resistant composites, e.g. regarding chimney liner tubes, an increasing demand is shown for such materials, which however do not necessarily reach "A2" = non-combustible effect under the above standard but show significantly better results than required under "B1". One of these requirements is the 30 minutes long resistance to 1000 °C heat stipulated in the EN 1443 inspection standard, which means retaining the majority of the formal and mechanical characteristics of the product subject to the inspection. This means, the chimney liner in the present example cannot collapse by the effect of the exposure concerned.

This, for example refers to chimneys of such composite materials, which are connected to wood-burning stoves. At these heating systems, carbon black, tar-like condensation of several components is generated on the inner surfaces of the chimney, which, in certain cases can ignite. Following any possible fire, the composite chimney must remain in an airtight state so that no flue gas may intrude in the living space.

Besides the above-mentioned requirements, easy processability with the commonly applied methods and the relatively cheap price also mean additional important aspects.

Flame-resistant resin-preparation and laminate produced of it are described in the patent description of "JP2000239491 (A) (FLAME-RETARDANT RESIN COMPOSITION, AND PREPREG AND LAMINATE MADE BY USING IT)", which do not contain any added halogenic compounds. The preparation is essentially contains-non-halogenated epoxy resin (Component A) a cross-linkage agent containing phenol novolac resin enriched with triazine (Component B) and a compound with the formula of 9,10-dihidro-9-oxa-10-(2,5-dioxotetrahidro-3-furanil-metil)-10-foszfafenantren-10-oxid (Component C). The prepreg is produced by the impregnation of the carrier with the resin-preparation.

The phenolic resin containing phosphor presented in the patent description of JP9003302 (A) (PHENOLIC RESIN COMPOSITION, PREPREG PRODUCED USING SAME AND LAMINATE) provides appropriate heat-resistance along with flame-resistance and, at adding appropriate additives, are suitable for producing prepregs. The preparation contains a phosphor compound as well as at least one nitrogenous compound of cyanogen-diamide and aniline containing any melamine resins, carbamide resins, urethane resins and their modified versions, one cyanurate compound and hydroquinone. If the preparation is used for producing laminate of approximately 50 wt % solid material content, its ideal phosphor compound content is 0.5-3 wt % and its ideal cyanurate content is 1-10 wt %.

Patent specification No. GB2473226 (A) (Composite materials) presents a cross-linking prepreg appropriate to produce the structural elements of aeroplanes. Prepreg contains a layer of conductive fibres and the first outside layer of a heat-convertible resin. The resin layer contains heat-convertible particles and carbon grains for providing better electric conductivity, by which the resistance to damages caused by lightning becomes improved. Beyond all that, it has excellent mechanical characteristics as well.

Patent specification No. HU218726, presents a hardened and glass-fibre reinforced resin-based chimney liner with due resistance to the temperature (max. 250-350 °C) of flue gases flowing in chimneys and to the corrosive effects of flue gases. The resin is pure furan resin or a (95-5) wt % mixture of phenolic resin and furan resin (5-95). The resin preferably contains fire-retardant filling material. However, the chimney liner created by this method can bear the temperature up to 250-350 °C, and therefore can resist to relatively low temperature flue gases leaving the modem gas-burning stoves and their relevant corrosive effects.

However, in case of the common burning systems (wood and/or coal), fireplaces and stoves, whereas flue gases of significantly higher temperature, in certain cases even over 900 °C, can enter the chimney, the applied method of glass-fibre reinforced, and hardened furanbased resin chimney liners are no longer appropriate. The chimney liner exposed to the given temperature rapidly spoils and in worse cases, can be even fire-hazardous. None of the materials presented in the above literature can comply with such requirements.

Hungarian patent application No. P1300573 describes a composite material with good heat resistance and decreased combustibility furan resin-based. However, the heat resistance of this material still fails to reach the desired level.

US 2016/060281 A1 discloses butadiene 2,3-diyl linked di-9,10-dihydro-9-oxa-10-phosphaphenantrene-10-oxide compounds, used in flame-retardant polymer compositions and in thermoset compositions.

Furthermore, the application and possible entry of boron compounds in organs rise health risks as well as indicated in current health researches. Therefore, the boron content (calculated to the entities concerned) shall be limited by European regulations.

Due to the above reasons, the development of such a composite material became necessary, which meets the requirements set against products to be exposed to high temperature (at least 900 °C).

It is an object of the present invention to provide a composite system with improved heat resistance in addition to the above reduced combustion composite system, which means that, with its reduced flammability, it not only prevents the propagation of possible fire, but also does not damage and maintains its mechanical properties at sufficiently high temperatures (e.g. not cracking). Moreover, our aim is also to decrease the concentration of boron relevant to the boron content below the European Union's maximum allowed 1 wt % limit value.

It has been discovered that, in addition to using additives and fillers, well-known components applied in other composite materials e.g. glass-fibre, glass pearl, boron compounds, the use of natrium-metasilicate pentahydrate readily available in commerce and melamine-derivatives (more exactly compounds containing homologues and preferably mainly melem and less melam (available in trade as Delflam^{®}, producer: Delamin Ltd United Kingdom)) as flame retardants and their relative proportions in the present invention, the fire-retardant effect is significantly increased, among others, due to the synergic effect of Deflam and the boron compounds present in a concentration below 1 wt % calculated to elemental boron as well as due to the special characteristics of Na-metasilicates.

Na-metasilicate (Na₂SiO₃) is the salt of orthosilicic acid and natrium. Its water solution is one of the components of soluble glass. Soluble glass is in fact various solutions of natrium--silicate. If solved in water, it composes a solution of alkaline reaction. In commerce, it is mostly available with its pentahydrate crystal version, but its anhydrate and nonahydrate forms are also known. It is also used as an additive of cement, at producing heat, water and acid-resistant cements and in the paper industry as well. Due to its alkaline reaction and good emulsifying characteristic, its application in solid purifying chimneys is wide-spread. No information is available regarding the admixture of plastic composites with metasilicates.

The melting point of Na-metasilicate pentahydrate is 72 °C, while the anhydrate has a melting point of 1088 °C (Donauchem Kft, HU - data sheet).

Without linking it with any specific theoretical considerations, by the effect of high temperature that is possible to be generated in a fire, the melted pentahydrate covers the organic particles and, while foaming, gradually losing water in an endotherm way and transforming to a state with higher and higher melting point, it protects the composite material from destruction.

We have recognised the unexpected effect that despite of the Na-metasilicates with alkaline reaction in water solutions applied even in large amounts, no detectible change in the cross-linkage of phenolic resin sets in. Therefore, it can be applied in the production of composite materials with phenolic resin content and can drop the amounts of boron compounds at the same time. As a result of a strongly decreased amount of the boron compound applied, the known phenomenon of complexing does not happen or it happens only to such an insignificant extent that does not significantly influence the creation of the "B" state of the phenolic resin.

The fire-retardant feature of melamine derivatives, especially the mixture of melem and melam (Delflam) is since by the effect of high temperature, large amount of nitrogen gets decomposed and discharged, which prevents the flame from spreading at minimum amount of smoke generated. At the same time, during fire-retarding, it produces a synergic effect with combustion-retardant agents of organic phosphate. Therefore, the desirable effect can be reached with admixing less amount of such agents.

### The structure of Delflam

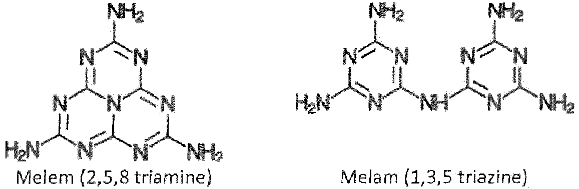

The composite material according to the invention, in contracts with the composite material presented in the patent description of Hungarian file number P1300573 provides better resistance to both alkalis and acids, and at the same time can stand much higher temperature without being spoiled.

The composite material subject to the invention is described in more details in the following:
Liquid resin composition according to the present invention suitable for the production of pre-impregnated, fibre-reinforced composite material with improved fire- and heat-resistance containing the mixture of 60 - 90 wt % phenolic resin, 0 - 16.7 wt % furan resin, 0 - 16.7 wt % carbamide resin and 0.01 - 10 wt % acid catalyst; containing 3 - 13 wt % Na-metasilicate pentahydrate in dry powder form, 1 - 6 wt % melamine derivative, wherein the melamine derivative is the mix of melem and melam, 0 - 8 wt % ammonium-polyphosphate and maximum 1 wt % boric compound calculated to elemental boron as fire-retardant additives and further, commonly used filler and colouring materials preferably selected from the group of materials containing metal oxides, kaolin, glass pearl.

Such catalysts may be among others methylhexahydrophthalic anhydride, phthalic anhydride, maleic anhydride, oxalic acid, sulfanilic acid and mixtures thereof.

The liquid resin composition according to the present invention containing mixture of liquid resins and catalysts comprises 3 - 13 wt % Na-metasilicates pentahydrate in dry powder form, 1 - 6 wt % melamine derivatives, wherein the melamine derivative is the mix of melem and melam, 4 - 10 wt % (calculated to elemental boron <1 wt %) borax and/or boric acid and/or Zn-borate, 0 - 8 wt % ammonium-polyphosphate, 0 - 13 wt % silica and 0 -1 wt % colloid SiO₂ (silica fume).

The liquid resin according to the present invention comprises, as corrosion-resistance and chemical resistance improving filling material 0 - 11 wt % glass flakes of maximum 1,700 micrometres diameter and 6.5 - 8.5 micrometres thickness.

The liquid resin according to the present invention additionally comprises other commonly used fillers and colouring agents of 0 - 7 wt %.

In the reduced flammability phenol-furan resin composition according to the present invention and the prepreg or reinforced composite material made therefrom the main flame retardant components are the Na-metasilicate penta-hydrate in dry powder form, melamine derivativebeing a mixture of mostly melem, and less amount of melam, and a boron compound in an amount below the maximum allowed limit value (calculated to elemental boron <1 wt %).

The significant difference between the prepreg compositions of the previous patent application number P1300573 and that of the present invention is that the amount of boron compounds in the mentioned description (boric acid and borax) exceeds 26 wt %, while in the composition according to the present invention it does not reach 1 wt % (calculated to elemental boron).

The proportion of phenolic resin has been increased, which improves the creation of the "B" state, and the decreased boron content has been dropped as a result of its complexing of effect disturbing the creation of the stable "B" state. The inspection materials prepared with the prepregs created by the matrix material set up during the samples were, in each case inspected after the cross-linkage set in. The cross-linkage was carried out in the common method at 105 °C temperature over 120 minutes.

### Sample 1

Matrix material is prepared for the production of prepreg: 500 weight parts of phenolic resin with 100 weight parts of furan resin. To the resin mixture, 180 weight parts of Nametasilicate pentahydrate (Donauchem Kft), 30 weight parts of (Delamim Ltd., UK), 120 weight parts of glass flake (GF750) Glassflakes (Glassflakes Ltd., UK), or (Owens-Coming, US) 420 weight parts of glass pearl of 50 micrometres, 2 mass rate of yellow iron oxide, 60 weight parts of borax and, as catalyst, 60 mass rate of sulfanilic acid is added. With matrix material prepared in the above method, glass textile of 330 g/m2 is impregnated so that the resin-glass textile weight parts is 70 : 30. A test sheet is made of the prepreg in the method of pressing according to MSZ EN ISO 1182 standard.

### Sample 2

The process follows the entire method described in Sample 1 with the only difference that only 50 weight parts of Na-metasilicate pentahydrate is mixed in.

### Sample 3

The process follows the entire method described in Sample 1 with the only difference that instead of furan resin, carbamide resin is used.

### Sample 4

The process follows the entire method described in Sample 1 with the only difference that no boron compound is mixed in the matrix material.

### Sample 5

The process follows the entire method described in Sample 3 with the only difference that instead of 3.4 weight parts of borax, 3.4 weight parts of boric acid is mixed in the matrix materials.

### Sample 6

Matrix material is prepared for the production of Prepreg: 28 weight parts of phenolic resin is mixed with 6 weight parts of furan resin. To the resin mixture, 11 weight parts of Na-metasilicate pentahydrate (Donauchem Kft), 1.7 weight parts of Delflam (Delamim Ltd., UK), 8.5 weight parts of Glassflakes (Glassflakes Ltd., UK), 23.8 weight parts of maximum 50 micrometres diameter of glass pearl, 0.12 weight parts of yellow iron oxide, 3.4 weight parts of borax and, as catalyst, 3.4 weight parts of sulfanilic acid is added. With matrix material prepared in the above method, glass textile of 330 g/m2 is impregnated so that weight parts of the resin - glass textile is 70:30. A test sheet is made of the prepreg in the method of pressing according to MSZ EN ISO 1182 standard.

### Sample 7

To the mixture of 90 weight parts of phenolic resin and 15 weight parts of furan resin, 30 weight parts of Na-metasilicate pentahydrate, 5 weight parts of Delflam, 25 weight parts of glass flakes, 70 weight parts of glass pearl, 0.4 weight parts of colouring (yellow iron oxide), 10 weight parts of borax (Na₂B₄O₇ 10 H₂O) and 10 weight parts of sulfanilic acid as catalyst is added. With this mixture, 50 weight parts of glass textile is impregnated. The boron content calculated to the complete mass of the prepreg is below 1 mass%. The prepreg prepared in this method meets the requirements of the combustion inspections (at 550 C° and then at 1000 C°) under EN 1443.

### Sample 8

To the mixture of 90 weight parts of phenolic resin and 15 weight parts of furan resin, 30 weight parts of Na-metasilicate pentahydrate, 5 weight parts of Delflam, 25 weight parts of glass flakes, 70 weight parts of glass pearl, 0.4 weight parts of colouring (yellow iron oxide), 10 weight parts of sulfanilic acid as catalyst is added. With this matrix mixture, 50 weight parts of glass textile is impregnated. The prepreg prepared in this method fails to meet the requirements of the combustion inspections (at 550 C° and then at 1000 C°) under EN 1443.

### Sample 9

The process follows the entire method described in Sample 6 with the only difference that 10 weight parts of boric acid is added to the matrix. The boron content calculated to the complete mass of the prepreg is below 1 mass%. The prepreg prepared in this method meets the requirements of the combustion inspections (at 550 C° and then at 1000 C°) under EN 1443.

### Sample 10 (not according to the invention)

The process follows the entire method described in Sample 6 with the only difference that instead of 50 weight parts of glass pearl, 20 weight parts of Al₂O₃ is mixed in, and instead of 3.4 weight parts of borax, 2 weight parts of Zn-borate is mixed in. The prepreg prepared in this method meets the requirements of the combustion inspections (at 550 C° and then at 1000 C°) under EN 1443.

### Sample 11

The process follows the entire method described in Sample 6 with the only difference that instead of 50 weight parts of glass pearl, 30 weight parts of silica flour and 10 weight parts of ammonium-polyphosphate and instead of 3.4 weight parts of borax, 2 weight parts of Zn-borate is mixed in. The prepreg prepared in this method meets the requirements of the combustion inspections (at 550 C° and then at 1000 C°) under EN 1443.

### Sample 12 (not according to the invention)

To the mixture of 90 weight parts of phenolic resin and 15 weight parts of furan resin, 30 weight parts of Na-metasilicate pentahydrate, 5 weight parts of Delflam, 20 weight parts of silica flour, 60 weight parts of glass pearl, 0.4 weight parts of colouring (yellow iron oxide), 10 weight parts of sulfanilic acid as catalyst is added. With this matrix mixture, 50 weight parts of glass textile is impregnated. The prepreg prepared in this method fails to meet the requirements of the combustion inspections (at 550 C° and then at 1000 C°) under EN 1443.

### Sample 13 (not according to the invention)

To 115 weight parts of phenolic resin 100 weight parts of Al₂O₃-t, 30 weight parts of glass pearl, 25 weight parts of ammonium-polyphosphate, 20 weight parts of Delflam, 20 weight parts of TiO₂ and 20 weight parts of sulfanilic acid is added. With this mixture, 60 weight parts of glass textile is impregnated. The prepreg prepared in this method meets the requirements of the combustion inspections (at 550 C° and then at 1000 C°) under EN 1443.

### Sample 14 (not according to the invention)

The process follows the entire method of the previous sample but further 50 weight parts of CaCO₃ and 2.5 weight parts of Zn-borate is added. With this mixture, 55 weight parts of glass textile is impregnated. The prepreg prepared in this method meets the requirements of the combustion inspections (at 550 C° and then at 1000 C°) under EN 1443.

Carrying out the inspection on the specimen according to the prescription of standard number MSZ EN ISO 1182, the following results were presented:

| Sample | fire-resistance class | EN 1443 inspection |
|---|---|---|
| Sample 1 | A2 (non-combustible) | no data |
| Sample 2 | B1 | no data |
| Sample 3 | A2 | no data |
| Sample 4 | B1 | no data |
| Sample 5 | A2 | no data |
| Sample 6 | A2 | no data |
| Sample 7 | A2 | no data |
| Sample 8 | A2 | no data |
| Sample 9 | A2 | complies |
| Sample 10 | A2 | complies |
| Sample 11 | A2 | complies |
| Sample 12 | B1 | fails to comply |
| Sample 13 | A2 | complies |
| Sample 14 | A2 | complies |

## Claims

1. Liquid resin composition suitable for the production of pre-impregnated, fiber-reinforced composite material with improved fire- and heat-resistance containing
the mixture of 60-90 wt % phenolic resin, 0-16.7 wt % furan resin, 0-16.7 wt % carbamide resin and 0.01-10 wt % acid catalyst, **characterized in that** it contains 3-13 wt % Na-metasilicate pentahydrate in dry powder form, 1-6 wt % melamine derivative, wherein the melamine derivative is the mix of melem and melam, 0-8 wt % ammonium-polyphosphate and maximum 1 wt% boric compound calculated to elemental boron as fire-retardant additives and further, commonly used fillers and coloring materials preferably selected from the group of materials containing metal oxides, kaolin, glass pearl.

2. Liquid resin composition according to claim 1, **characterized in that** the resin preparation contains boric acid, borax and/or Zn-borate.

3. liquid resin composition according to any of claims 1 or 2, **characterized in that** the resin preparation contains maximum 11 wt % 6.5 - 8.5 micrometers thick and maximum 1700 micrometers of glass flakes as well.

4. Use of a resin composition according to any one of the preceding claims for preparing a prepreg, wherein the resin to glass fiber weight ratio is (60-80) : (20-40).

5. Use of a prepreg according to claim 4 for the preparation of a composite material by conventional crosslinking.

6. Use of the composite material according to claim 5 as a chimney liner.

## Patentansprüche

1. Flüssige Harzzusammensetzung, die zur Herstellung von vorimprägniertem, faserverstärktem Verbundmaterial mit verbesserter Brand- und Hitzebeständigkeit geeignet ist, enthaltend
die Mischung aus 60-90 Gew.-% Phenolharz, 0-16,7 Gew.-% Furanharz, o-16,7 Gew.-% Carbamidharz und 0,01-10 Gew.-% Säurekatalysator, **dadurch gekennzeichnet, dass** sie 3-13 Gew.-% Na-Metasilikat-Pentahydrat in trockener Pulverform, 1-6 Gew.-% Melaminderivat, wobei das Melaminderivat die Mischung aus Melem und Melam ist, 0-8 Gew.-% Ammoniumpolyphosphat und maximal 1 Gew.-% Borverbindung, berechnet auf elementares Bor, als feuerhemmende Additive und weitere, üblicherweise verwendete Füllstoffe und Farbstoffe, vorzugsweise ausgewählt aus der Gruppe von Materialien enthaltend Metalloxide, Kaolin, Glasperle, enthält.

2. Flüssige Harzzusammensetzung nach Anspruch 1, **dadurch gekennzeichnet, dass** die Harzzubereitung Borsäure, Borax und/oder Zn-Borat enthält.

3. Flüssige Harzzusammensetzung nach einem der Ansprüche 1 oder 2, **dadurch gekennzeichnet, dass** die Harzzusammensetzung maximal 11 Gew.- % 6,5 - 8,5 Mikrometer dicke und maximal 1700 Mikrometer Glasflocken enthält.

4. Verwendung einer Harzzusammensetzung nach einem der vorhergehenden Ansprüche zur Herstellung eines Prepregs, wobei das Gewichtsverhältnis von Harz zu Glasfaser (60-80) : (20-40) beträgt.

5. Verwendung eines Prepregs nach Anspruch 4 zur Herstellung eines Verbundmaterials durch konventionelle Vernetzung.

6. Verwendung des Verbundmaterials nach Anspruch 5 als Kaminauskleidung.

## Revendications

1. Composition résinique liquide appropriée pour la production d'un matériau composite préimprégné, renforcé de fibres qui présente une meilleure résistance au feu et à la chaleur, contenant un mélange de 60-90 % en poids d'une résine phénolique, 0-16,7 % en poids d'une résine furanique, 0-16,7 % en poids d'une résine carbamidique et 0,01-10 % en poids d'un catalyseur acide, **caractérisée en ce qu'**elle contient 3-13 % en poids de métasilicate de Na pentahydraté sous forme d'une poudre sèche, 1-6 % en poids d'un dérivé de la mélamine, où le dérivé de la mélamine est un mélange de mélème and mélame, 0-8 % en poids de poly(phosphate d'ammonium) et 1 % en poids au maximum (exprimé en bore élémentaire) d'un composé borique, en tant qu'additifs ignifuges, ainsi que des matières de remplissage et matériaux colorants communément utilisés préférablement sélectionnés dans le groupe consistant en des matériaux qui contiennent des oxydes métalliques, le kaolin, la perle de verre.

2. Composition résinique liquide selon la revendication 1, **caractérisée en ce que** la préparation résinique contient de l'acide borique, du borax et/ou du borate de Zn.

3. Composition résinique liquide selon l'une quelconque des revendications 1 ou 2, **caractérisée en ce que** la préparation résinique contient également 11 % en poids au maximum de paillettes de verre d'une épaisseur de 6,5 - 8,5 micromètres et de 1 700 micromètres au maximum.

4. Utilisation d'une composition résinique selon l'une quelconque des revendications précédentes dans la préparation d'un préimprégné, où le rapport en poids résine : fibres de verre est de (60-80) : (20-40).

5. Utilisation d'un préimprégné selon la revendication 4 dans la préparation d'un matériau composite par réticulation conventionnelle.

6. Utilisation du matériau composite selon la revendication 5 comme doublure de cheminée.
